# EUROPÄISCHE PATENTSCHRIFT

(11) **EP 1 242 764 B1**
(45) Veröffentlichungstag und Bekanntmachung des Hinweises auf die Patenterteilung: **10.11.2004**
(21) Anmeldenummer: 00993435.7
(22) Anmeldetag: 06.12.2000
(51) Int. Cl.: F16L 3/12

(54) **BIEGE- UND HALTEHILFSMITTEL FÜR ROHRE, KABEL UND LEITUNGEN**
BENDING AND RETAINING DEVICE FOR TUBES, CABLES AND PIPES
DISPOSITIF DE FLEXION ET DE RETENUE POUR TUYAUX, CABLES ET LIGNES ELECTRIQUES

(30) Priorität: 13.12.1999 DE 19960025; 05.09.2000 DE 10043580
(43) Veröffentlichungstag der Anmeldung: 25.09.2002
(73) Patentinhaber: Kessler, Peter, 75236 Kämpfelbach (DE)
(72) Erfinder: Kessler, Peter, 75236 Kämpfelbach (DE)
(74) Vertreter: Pietruk, Claus Peter, Dipl.-Phys.
(86) Internationale Anmeldenummer: PCT/DE2000/004336
(87) Internationale Veröffentlichungsnummer: WO 2001/044704

(56) Entgegenhaltungen:
- DE-A- 3 925 171
- DE-A- 4 032 256
- DE-U- 29 610 725

## Beschreibung

Die Erfindung betrifft ein Biege- und Haltehilfsmittel, insbesondere für Rohre, Kabel und Leitungen, bestehend aus einem zumindest bereichsweise geschlossenen, an beiden Stirnseiten offenen, biegbaren Hohlkörper mit einer im wesentlichen rohrförmigen Hüllfläche, der aus einzelnen, mit Verbindungselementen (12) verbundenen Gelenkgliedern (22) besteht, die eine Öffnung in Richtung auf die Verbindungselemehte (12) aufweisen.

Aus der DE 39 25 171 A1 ist eine Rohrhaltevorrichtung bekannt. Dies ist ein biegbarer, länglicher, beidseitig offener Hülsenkörper, der an beiden Enden offen ist und V-förmige Abschnitte aufweist. Hiermit können gebogene Leitungen oder Rohre in ihrer Lage fixiert werden, wenn durch die Ösen der Endstücke z.B. ein Kabelbinder oder Draht den geformten Radius zusammenhält. Zum Einlegen der Leitung wird der vorgeformte Hülsenkörper geöffnet und wieder verschlossen.

Im Rohrleitungs- oder Leitungsbau sind häufig Leitungsführungen erforderlich, bei denen enge Radien eingehalten werden müssen. Gleichzeitig dürfen diese nicht unter äußeren oder inneren Einwirkungen, wie z.B. Temperatur, ihre Lage verändern. Für eine schnelle, kostensparende Montage werden Leitungen geringer Wandstärke und geringen Querschnitts oft frei gebogen z.B. beim Verlegen. Für spezielle Anwendungsfälle, z.B. bei bodenverlegten Leitungen, die am Heizkörper nach oben geführt werden sollen, benötigt man bei geringem, niedrigen Fußbodenaufbau besonders kleine Radien.

Bei einer Verlegung von Rohren in Wandschlitzen müssen bedingt durch sonst große Schlitzradien Winkelfittinge mit dem Nachteil hoher Kosten und Leckgefahr eingebaut werden.

Beim Verlegen von Kabeln oder Kabelbäumen z.B. in Maschinen oder Fahrzeugen müssen an gefährdeten Stellen zur exakten Führung der Kabel oder Kabelbäume diese aufwendig mit Wikkelbandagen fixiert bzw. zwangsgeführt werden.

Der vorliegenden Erfindung liegt daher die Problemstellung zugrunde, ein Hilfsmittel zur Formgebung und Halterung von Rohren, Leitungen und Kabel zu entwickeln, das eine annähernd gleichmäßige Formgebung bei freiem Biegen ermöglicht und die erzielte Krümmung auch bei Veränderung äußerer Einflüsse wie z.B. Temperatur gewährleistet. Sie soll einfach herzustellen und zu montieren sein.

Diese Problemstellung wird mit den Merkmalen des Hauptanspruches gelöst. Dazu ist das Biege- und Haltehilfsmittel so aufgebaut, dass das Verbindungselement ein definiertes eindimensionales Gelenk ist und dass an der den Verbindungselementen gegenüberliegenden Seite des Biege- und Haltehilfsmittels Rastelemente angeordnet sind, die beim Biegen des Biege- und Haltehilfsmittels die jeweils benachbarten Gelenkglieder formschlüssig miteinander verbinden.

Bei der Montage wird das Hilfsmittel auf das zu biegende Rohr oder Leitung bis an die Biegestelle geschoben. Der unveränderliche Innendurchmesser der Gelenkglieder ist größer als der Außendurchmesser des Rohres. Das Hilfsmittel wird so ausgerichtet, dass die Verbindungsgelenke in der Biegeebene liegen und die gedachten Gelenkachsen normal zu diesen angeordnet sind. Werden nun die freien Rohrenden in Richtung des auf das Rohr bezogenen Biegemittelpunktes gebogen, indem auf die Mitte des Hilfsmittels eine Kraft aufgebracht wird, zieht das Rohr das Hilfsmittel mit. Die Krafteinleitung auf das Rohr im Bereich der Biegung ist auf eine größere Fläche verteilt als beim herkömmlichen freien Biegen. Dadurch wird die Gefahr des Beulens oder Knickens des Rohres verhindert. Es können somit problemlos kleinere Radien als beim herkömmlichen freien Biegen gebogen werden.

Im gebogenen Zustand haben sich die einzelnen Gelenkglieder selbsttätig miteinander verrastet. So ist eine dauerhafte Lage des gebogenen Rohres oder Leitung gewährleistet. Durch den Durchmesserunterschied zwischen Außendurchmesser des Rohres und Innendurchmesser des Hilfsmittels sind kleine Verformungen des Rohres innerhalb des Zwischenraumes möglich.

Das Hilfsmittel ist im gebogenen Zustand länger als die Bogenlänge des Rohres. Damit wird der gesamte Bogen geführt und wird gleichmäßig gebogen. Das Rohr und das Hilfsmittel können im gebogenen Zustand an den Enden der Vorrichtung einen spitzen Winkel einschließen, d.h. das Rohr ist bei einem Viertelbogen genau um 90° gebogen, während der Biegewinkel des Hilfsmittels z.B. 88° beträgt.

Das Hilfsmittel dient auch als Schutz des Rohres bzw. der Leitung vor äußeren Beschädigungen im Biegebereich. Es können im Hilfsmittel z.B. Metall-, Kunststoff- oder Verbundmaterialrohre gebogen und geführt werden. Einsetzbar ist das Hilfsmittel aber auch als reine Führungsvorrichtung beispielsweise für Schläuche und flexible Elektroleitungen.

Der maximale Biegewinkel des Rohres wird begrenzt durch das Berühren der Stirnseiten zweier benachbarter Gelenkglieder. Hiermit wird eine zu starke Biegung des Rohres verhindert. Das Einrasten der Verriegelung erfolgt, bevor die Stirnseiten sich berühren. Zwischen den Gelenkgliedern besteht dann noch ein beispielsweise kleiner Zwischenraum. Dieser ergibt sich durch das Hinterschneiden der selbsthaltenden Verrastung.

Die Biegerichtung des Hilfsmittels wird durch das Verbindungsgelenk der Gelenkglieder vorgegeben. Sein Widerstandsmoment gegen Biegung ist in Richtung des Gelenkgliedes niedriger als in der Querrichtung.

Weitere Einzelheiten der Erfindung ergeben sich aus den Unteransprüchen und der nachfolgenden Beschreibung mehrerer schematisch dargestellter Ausführungsbeispiele.
- Figur 1:: Längsschnitt eines Biege- und Haltehilfsmittels in der gestreckten Lage;
- Figur 2:: Frontansicht des Hilfsmittels;
- Figur 3:: Detail eines Rasthakens;
- Figur 4:: Biege- und Haltehilfsmittel im Einbauzustand;
- Figur 5:: Kombination zweier Biege- und Haltehilfsmittel.

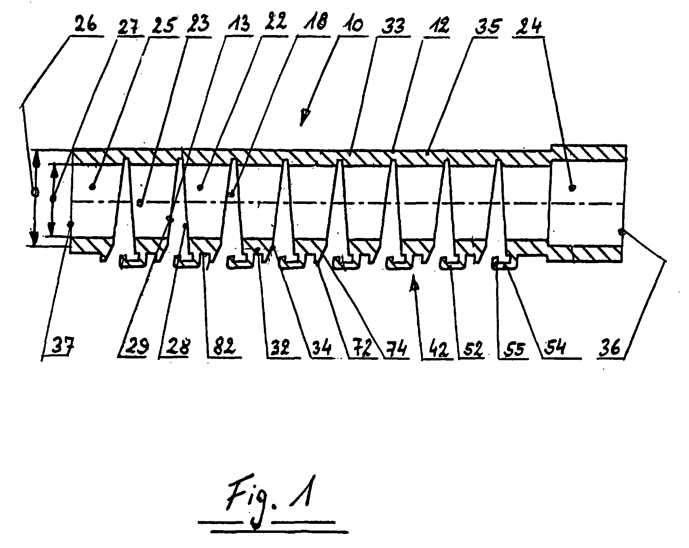

Figur 1 zeigt einen Längsschnitt eines Biege- und Haltehilfsmittel (10) in der gestreckten Lage. Dieses Biegehilfsmittel (10) ist ein rohrförmiges Hilfsmittel, das in Gelenkglieder (22) mit dazwischenliegenden Zwischenräumen (18) aufgeteilt ist. Die Gelenkglieder (22) sind über Filmgelenke (12) miteinander verbunden. Von den Gelenkgliedern (22) ist eines ein Anfangsglied (24) und eines ein Endglied (25). An den Gelenkgliedern sind Rastvorrichtungen (42) aus Rasthaken (52) und Rastnocken (72) angeordnet.

Die Biegehilfsmittel (10) umfasst je nach gewünschtem Radius die hierfür notwendigen - beispielsweise neun - Gelenkglieder (22). Diese sind Hülsen, die beispielsweise einen zueinander konzentrischen zylindrischen Außen- (26) und Innendurchmesser (27) aufweisen. Der Innendurchmesser (27) beträgt z.B. etwa 70% des Außendurchmessers (26). Alle Gelenkglieder (22) haben zumindest bereichsweise den gleichen Innen- (27) und den gleichen Außendurchmesser (26).

Die beiden Stirnseiten (28, 29) eines jeden Gelenkgliedes (22) schließen zusammen einen spitzen Winkel ein. Es entsteht so eine kurze (32) und eine lange (33) Mantelseite, die beide in der Zeichnungsschnittebene nach Figur 1 liegen. Der Scheitelpunkt des Winkels der Stirnseiten (28, 29) liegt außerhalb des Gelenkgliedes (22) auf der kurzen Mantelseite (32). An der kurzen Mantelseite (32) sind die Rastvorrichtungen(42) angeformt, während an der langen Mantelseite (33) die Filmgelenke (12) zur Verbindung der einzelnen Gelenkglieder (22) angeordnet sind.

Die Rastvorrichtungen (42) bestehen in der Regel aus einem Rasthaken (52) und einem Rastnocken (72). Der zum jeweiligen Rasthaken (52) gehörende Nocken (72) befindet sich auf dem benachbarten Gelenkglied (22). Bei jedem Gelenkglied (22), das auf beiden Seiten ein benachbartes Gelenkglied (22) hat, sind die Rasthaken (52) und die Rastnocken (72) im Längsschnitt des Biegehilfsmittels (10) nebeneinander auf der kurzen Seite (32) angeordnet. Bei Gelenkgliedern (22) mit nur einem benachbarten Gelenkglied (22) ist nur ein Rasthaken (52) bzw. nur ein Rastnocken (72) auf der kurzen Seite (32) angeformt.

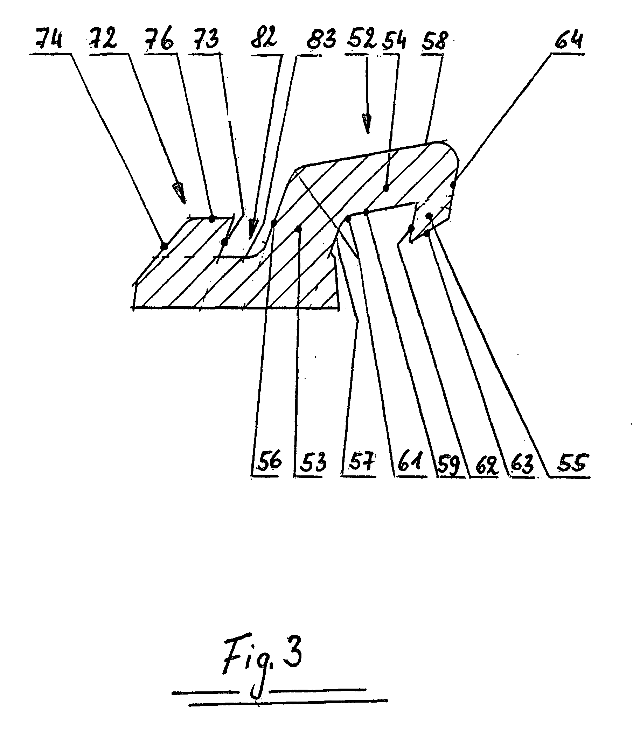

Der Rasthaken (52), vgl. Figur 3 ist etwa um die Hälfte der Länge der kurzen Mantelseite (32) erhöht über das Gelenkglied (22) angeordnet. Er besteht aus einem senkrecht oder schräg nach oben orientierten Ausleger (53), einem annähernd waagerecht orientierten Arm (54) und einem in Richtung des Gelenkgliedes (22) orientierten Haken (55). Der Rasthaken (52) ist annähernd parallel zur kurzen Mantelseite (32) ausgerichtet ist und steht in einer Richtung über diese um etwa die Hälfte der Länge der kurzen Mantelseite (32) an der Stirnseite (28) über.

Der Ausleger (53) hat im Längsschnitt nach Figur 3 zwei Flanken (56, 57). Diese sind in der gleichen Richtung orientiert wie der Freiraum (82). Beide Flanken (56, 57) sind zueinander zumindest bereichsweise parallel. Die in Figur 3 linke Flanke (56) geht im Längsschnitt in einem Radius in die Grundfläche des Freiraums (83) über. Die rechte Flanke (57) geht mit einer Übergangskerbe in die Stirnseite (28) des Gelenkgliedes (22) über.

An den Ausleger (53) ist der Arm (54) angebunden. Dieser ist annähernd quaderförmig und hat annähernd die gleiche Materialstärke wie der Ausleger (53) und ist in einem stumpfen oder rechten Winkel zu diesem angeordnet. Somit liegt der Arm (54) z.B. im spitzen Winkel oder parallel nach außen orientiert zur Mittellinie (23) des Gelenkgliedes (22). Ober- (58) und Unterseite (59) des Armes (54) gehen in Fasen (61) in die Flanken (56, 57) des Auslegers. (53) über. Die Länge des Armes (54) entspricht in etwa der Länge des Auslegers (53). An dem dem Ausleger (53) gegenüberliegenden Ende des Armes (54) ist der Haken (55) angeordnet. Dies ist im Längsschnitt ein trapezförmiger Nocken, dessen Basis (62) im spitzen Winkel zum Arm (54) angeordnet ist. Auch dieser Winkel kann eine Entlastungskerbe aufweisen. Die Länge der Basis (62) und die Höhe des Trapezes sind etwa gleich. Die zum Gelenkglied (22) orientierte Flanke (63) des Trapezes ist im spitzen Winkel zur Basis (62), aber auch im spitzen Winkel zur Mittellinie (23) des Gelenkgliedes (22) angeordnet. Die Höhe des Trapezes entspricht etwa 90% der Breite des Freiraums (82).

Die Breite des Rasthakens (52) beträgt etwa ein Drittel des Außendurchmessers des Biegehilfsmittels (10). Am der Flanke (56) des Auslegers (53) kann beispielsweise auch eine Aussparung angeordnet sein, in der mit einem Werkzeug zum Anheben des benachbarten Rasthakens (52) eingegriffen werden kann.

Der Rastnocken (72) ragt um etwa ein Viertel der Länge der kurzen Mantelseite (32) aus dieser heraus. An der Stirnseite (29) geht der Nocken unter 50° in die Fase (34) über. Die Länge des Nockens beträgt etwa ein Fünftel der Länge der kurzen Mantelseite (32).

Der Rastnocken (72), vgl. Figur 3, ist im Längsschnitt ein schräg in Richtung des Rasthakens (52) orientiertes Trapez, dessen linke Seitenflanke (74) einen kleineren Winkel zur Horizontalen einschließt als die rechte Flanke (73). Die Höhe des Trapezes entspricht etwa 85% der Länge der oberen Seite (76). Der Übergang der linken Seitenflanke (74) zur Oberseite (76) ist als Radius ausgeformt. Die rechte Seitenflanke (73) des Rastnockens (72) ist gleichzeitig eine Seite des Freiraums (82). Die rechte Seitenflanke (73) und die Grundfläche des Freiraums (83) schließen einen spitzen Winkel ein. Dieser Winkel kann mit einer Entlastungskerbe ausgeführt sein.

Die Breite des Rastnockens (72) beträgt etwa ein Drittel des Außendurchmessers der Biegehilfsmittels (10).

Zwischen Rasthaken (52) und Rastnocken (72) ist ein Freiraum (82) angeordnet. Dieser hat annähernd die Gegenkontur des Hakens (55).

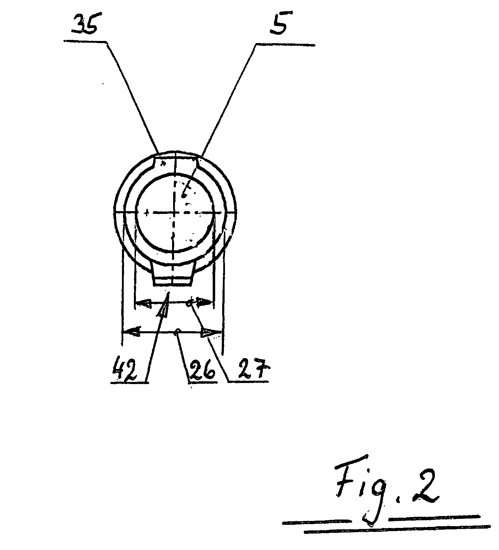

An den die Gelenkglieder (22) verbindenden Filmgelenken (12), vgl. Figur 1, ist die Wandstärke des Biegehilfsmittels (10) maximal etwa halb so groß wie im Bereich der Gelenkglieder (22). Die Außenseite der Filmgelenke (12) geht in die Außenseite der Gelenkglieder (22) über, die in der Fortsetzung der Filmgelenke (12) auf ihrer langen Mantelseite (33) einen Rückensteg (35), vgl. Fig. 2, bilden.

Alle Gelenkglieder (22) des Biegehilfsmittels (10) sind bis auf das Anfangs- (24) und Endglied (25) gleich aufgebaut. Alle Rasthaken (52) zeigen in die gleiche Richtung, z.B. in Richtung des Endgliedes (25). Dementsprechend hat das Anfangsglied (24) nur einen Rasthaken (52) und das Endglied (25) nur einen Rastnocken (72). Beim Anfangs- (24) und Endglied (25) ist die jeweils ein freies Ende darstellende Stirnseite (36, 37) normal zur Mittellinie des Hilfsmittels (10) orientiert.

Das Anfangsglied (24) ist im Bereich der langen Mittellinie (23) etwa drei Mal so lang wie ein Gelenkglied (22). Im ersten Drittel, also in der Nähe des benachbarten Gelenkgliedes (22), ist der Innen- (27) und der Außendurchmesser (26) vergleichbar mit dem des Gelenkglieder (22). Im übrigen Bereich des Anfangsgliedes (24) ist der Innendurchmesser größer als der Außendurchmesser des Endgliedes (25). Die Wandstärke dieses Bereiches ist identisch mit der der übrigen Gelenkglieder (22).

In der gestreckten Lage des Biegehilfsmittels (10) entstehen zwischen den Gelenkgliedern (22) Zwischenräume (18), die im Längsschnitt bzgl. der Zeichnungsebene nach Figur 1 die Form eines gleichschenkligen Dreiecks haben. Die zwei gleichlangen Schenkel werden durch die Stirnseiten (28, 29) der angrenzenden Gelenkglieder (22) gebildet. Die Winkelhalbierende des durch diese Schenkel eingeschlossenen Winkels steht senkrecht zur Mittellinie (13) des gestreckten Biegehilfsmittels (10).

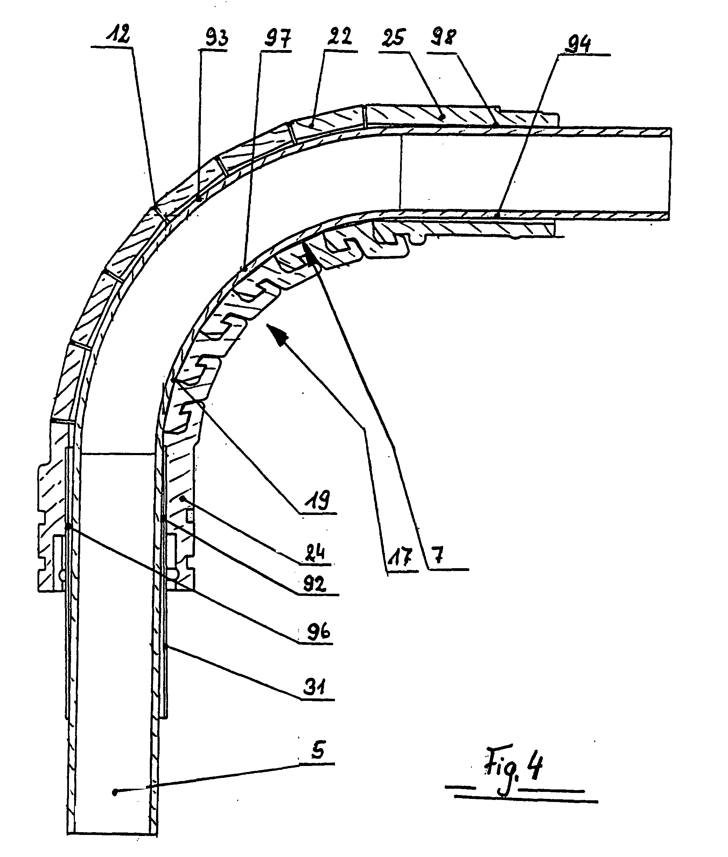

Figur 4 zeigt das Biegehilfsmittel (10) in der Einbaulage. Das Hilfsmittel ist auf ein Rohr (5) aufgeschoben. Beim Biegen des Rohres (5) folgt die Rohrkrümmung der durch das Biegehilfsmittel vorgegebenen Biegeform. Der Rückensteg (35) und die Rastvorrichtungen (42) liegen hierbei in einer Ebene mit dem Mittelpunkt (7) des Biegeradius des Rohres (5). Der Mittelpunkt des Biegeradius des Rohres (5) liegt hierbei auf der Seite des Rastvorrichtungen (42). Beim Biegen legt sich das Rohr (5) im Bereich der mittleren Gelenkglieder (22) z.B. an der Anlagefläche (93) an der Seite des Rückensteges (35) und am Anfangs- (24) und Endglied (25) an den Anlageflächen (92, 94) an die Seite der Rastvorrichtungen (42) an. Die Stirnseiten (28, 29) der einzelnen Gelenkglieder (22) nähern sich und die Rasthaken (52) werden wegen der unterschiedlichen Schrägen der Flanken (63, 76) unter elastischer Verformung über die Rastnocken (72) geschoben, wo sie durch Anlage des Hakens (55) an der dem Freiraum (82) zugewandten Seite (73) des Nockens (72) einrasten. Durch die Hinterschneidung des Hakens ist ein fester Sitz gewährleistet. Die Zwischenräume (18) zwischen den Gelenkgliedern (22) werden hierbei zu Zwischenräumen (19) verkleinert. Beim Weiterbiegen berühren sich die Stirnseiten (28, 29) der einander benachbarten Gelenkglieder (22) und begrenzen so das Biegen. Zum Einrasten der Rastvorrichtungen (42) wurde das Rohr (5) weiter gebogen, als es für die Einbaulage erforderlich wäre. Nach dem Loslassen des Rohres (5) federt dieses aufgrund seiner Elastizität zurück. Diese Rückfederbewegung wird durch die Rastvorrichtung (42) des Biegehilfsmittels (10) begrenzt. Die Hinterschneidungen der Haken (55) gewährleisten einen festen Sitz.

Nach dem Rückfedern liegt das Rohr (5) in der Einbaulage z.B. an drei Stellen am dem Biegehilfsmittel (10) an. Im Anfangsglied (24) liegt es an der Fläche (96) auf der Seite des Filmgelenks (12) an, im Bereich der mittleren Gelenkglieder (22) an der Fläche (97) auf der Seite der Rastvorrichtungen (42) und im Endstück (25) an der Fläche (98) auf der Seite der Filmgelenke (12). Im Anfangs- (24) und ggf. auch im Endstück (25) ist die Anlagefläche (96, 98) des Rohres (5) am äußeren Punkt des kleineren Innendurchmessers des Biegehilfsmittels (10) angeordnet. Das Biegehilfsmittel (10) ist hierbei etwa um zwei Rohrdurchmesser länger als die Bogenlänge des Rohrbogens. Der Biegeradius des Biegehilfsmittels (10) ist kleiner als der Biegeradius des Rohres (5), um das Rohr (5) in seiner Lage zu halten.

Der Innendurchmesser des Biegehilfsmittels (10) ist beispielsweise 10% größer als der Außendurchmesser des Rohres (5). Um das Rohr (5) z.B. um 90° in einem Bogen zu verbiegen, schließen die Mittellinien (23) des Anfangs- (24) und des Endstückes (25) einer z.B. neunteiligen Biegevorrichtung (10) einen Winkel von 88° ein. Das neunte Teil ist in Figur 4 ein in das Anfangsglied (24) eingestecktes, dünnwandiges Schutzrohr (31).

Der erforderliche Biegeradius des Biegehilfsmittels (10) ist abhängig von der gewählten Krümmung des Rohres (5), vom Verhältnis der Bogenlänge des Rohres (5) zur Länge des Biegehilfsmittels (10) sowie vom Verhältnis des Innendurchmessers des Biegehilfsmittels (10) zum Außendurchmesser des Rohres (5).

Wird eine größere Krümmung als z.B. im obigen Beispiel gewählt, ist bei sonst gleichen Abmessungen der Biegevorrichtung (10) ein kleinerer Biegeradius des Hilfsmittels (10) zu wählen. Der durch die Stirnseiten (28, 29) der Gelenkglieder (22) eingeschlossene Winkel wird größer.

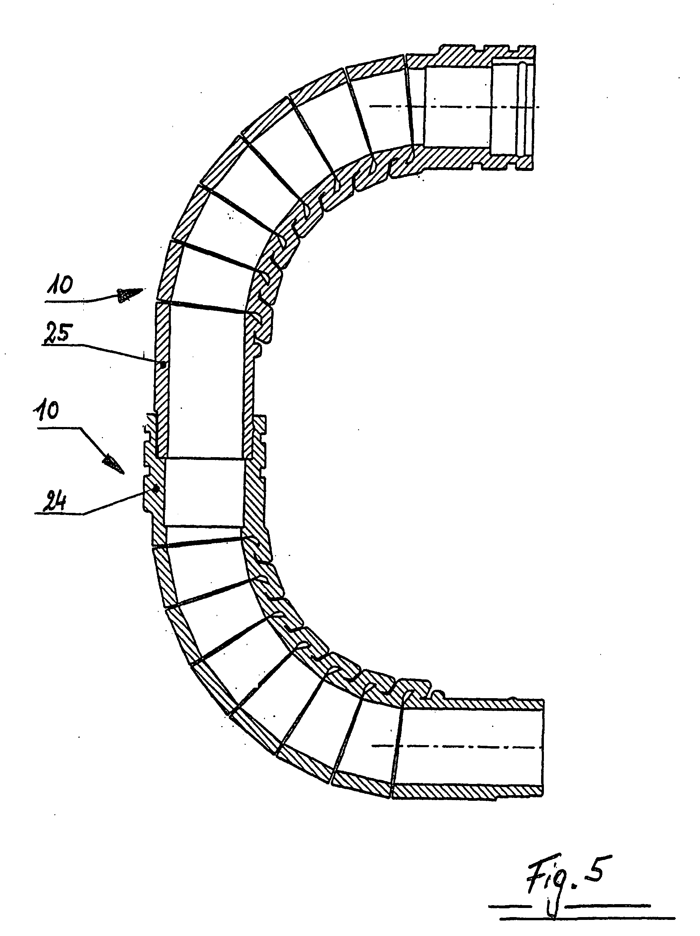

Figur 5 zeigt die Verbindung zweier identischer Biegehilfsmittel (10), um beispielsweise einen Biegewinkel von 180° zu erreichen. Beide Biegehilfsmittel (10) werden direkt oder mit mindestens einem Zwischenring in der gestreckten Lage zusammengesteckt. Werden nun die Rohrenden in Richtung der Rastvorrichtungen (42) gebogen, legt sich das Rohr (5) in der Nähe der Verbindung der beiden Biegehilfsmittel (10) an die Seite der Filmgelenke (12) an. Am Anfangs- (24) bzw. Endglied (25) der kombinierten Biegehilfsmittel (10) liegt das Rohr (5) an der Seite der Rastvorrichtungen (42) an. Beim Biegen nähern sich die Stirnflächen (28, 29) der Gelenkglieder (22), bis die Rastvorrichtungen (42) einrasten.

Der Bogen kann auch ohne gerades Zwischenstück hergestellt werden. Dann hat das Biegehilfsmittel eine größere Gliederanzahl, um eine direkte 180°-Führung zu erzielen.

Es ist auch möglich, die 90°-Bögen einzeln nacheinander zu biegen. Dann entspricht der Biegevorgang dem in Figur 4 beschriebenen. Die Anlage nach der Entspannung erfolgt aber wie in Figur 5 beschrieben.

Bei Einsatz des Biegehilfsmittels (10) wird die aufgebrachte Last durch die Innenwandstärke des Biegehilfsmittels auf einen großen Bereich der Rohroberfläche verteilt. Die Knickgefahr des Rohres (5) wird ausgeschlossen. Nach Beginn des Biegevorgangs wird die von außen eingeleitete Kraft auf die drei Anlageflächen (92 - 94) verteilt. Somit kann sich der dem Biegemittelpunkt (7) des Rohres (5) zugewandte Bereich des Rohres (5) ohne äußere Führung verformen.

Das Biegehilfsmittel (10) kann aus Kunststoff, z.B. als Spritzgussteil oder aus Metall gefertigt werden, wobei für die Rastvorrichtungen (42) auch andere selbstschließende Elemente einsetzbar sind. Es sind auch Kombinationen der Werkstoffe möglich. So kann bei Verwendung schwer zu biegender Rohre (5) z.B. eine zusätzliche, evtl. metallische Verrastung angeordnet werden. Auch ist es möglich, lösbare Rastvorrichtungen zu benutzen, um z.B. bei einem Austausch der Rohre (5) das Biegehilfsmittel (10) weiterzuverwenden.

Das Biegehilfsmittel (10) kann für den Einbau auch mit zusätzlichen Halte- und Befestigungsvorrichtungen versehen werden. Es kann auch in Rohrführungsvorrichtungen eingebaut werden oder an diesen angebracht werden.

Durch entsprechende Ausbildung bzw. Kombination der Hilfsmittel (10) können auch beliebige Winkel gebogen werden.

Die Tendenz des Rohres, z.B. durch seine Elastizität und bei Temperaturschwankungen seine Lage zu verändern, wird durch das Verrasten verhindert.

Die Gelenkglieder (22) können auch mit Aussparungen versehen sein, die sich außerhalb der Zonen der Rastvorrichtungen (42) befinden. Auch können die Zwischenräume (18) zwischen den Gelenkgliedern (22) so ausgeformt sein, dass die Zwischenräume (19) nach dem Biegen des Rohres (5) groß sind, wobei z.B. die Rastvorrichtungen (42) die Biegung begrenzen. Bei Gefahr der Beschädigung des Rohres (5) in diesem Bereich sollten jedoch die Zwischenräume (19) nach dem Biegen klein sein.

Die Rastvorrichtungen (42) können auch so ausgebildet sein, dass an Stelle der Rastnocken (72) an den Gelenkgliedern (22) Nuten zum Einrasten der Rasthaken (52) angeordnet sind.

Das in dem Ausführungsbeispiel beschriebene Hilfsmittel (10) ist für einen konstanten Krümmungsradius vorgesehen. Der Krümmungsradius kann aber auch progressiv oder degressiv sein, es sind auch Lösungen denkbar, bei der zwei oder mehrere gegensinnige Krümmungen miteinander verbunden sind.

Anstatt der Filmgelenke (12) können auch andere eindimensionale Gelenke eingesetzt werden.

Für jegliche vorstellbare Zwangsführung von Rohren und Leitungen mit beliebiger Formgebung ist vorgesehen, die Glieder einzeln steckbar auszuführen und ggf. mit drehbaren Adaptern jede gewünschte Richtung vorzugeben.

### Bezugszeichenliste:

- 5: Rohr
- 7: Mittelpunkt des Biegeradius von 5

- 10: Biegehilfsmittel, Biege- und Haltehilfsmittel
- 12: Filmgelenk, Verbindungselement, eindimensionales Gelenk
- 13: Mittellinie

- 17: Mittelpunkt des Biegeradius von 10
- 18: Zwischenraum
- 19: Zwischenraum

- 22: Gelenkglied
- 23: Mittellinie
- 24: Anfangsglied, Gelenkglied
- 25: Endglied, Gelenkglied
- 26: Außendurchmesser
- 27: Innendurchmesser
- 28: Stirnseite, Stirnfläche
- 29: Stirnseite mit Fase, Stirnfläche

- 31: Schutzrohr
- 32: kurze Mantelseite
- 33: lange Mantelseite
- 34: Fase zu 29
- 35: Rückensteg
- 36: Stirnseite Anfangsglied außen
- 37: Stirnseite Endglied außen

- 42: Rastvorrichtung, Rastelemente
- 52: Rasthaken
- 53: Ausleger
- 54: Arm
- 55: Haken
- 56: Seitenflanke zu 53
- 57: Seitenflanke zu 53
- 58: Oberseite zu 54
- 59: Unterseite zu 54

- 61: Fase
- 62: Basis
- 63: Flanke

- 72: Rastnocken, Nocken
- 73: Seitenflanke
- 74: Seitenflanke
- 76: Oberseite

- 82: Freiraum
- 83: Grundfläche des Freiraums

- 92: Anlagefläche im Anfangsglied zu Beginn des Biegevorgangs
- 93: Anlagefläche im mittleren Bereich zu Beginn des Biegevorgangs
- 94: Anlagefläche im Endglied zu Beginn des Biegevorgangs

- 96: Anlagefläche im Anfangsglied nach Beendigung des Biegevorgangs
- 97: Anlagefläche im mittleren Bereich nach Beendigung des Biegevorgangs
- 98: Anlagefläche im Endglied nach Beendigung des Biegevorgangs

## Patentansprüche

1. Biege- und Haltehilfsmittel, insbesondere für Rohre, Kabel und Leitungen, bestehend aus einem zumindest bereichsweise geschlossenen, an beiden Stirnseiten offenen, biegbaren Hohlkörper mit einer im wesentlichen rohrförmigen Hüllfläche, der aus einzelnen, mit Verbindungselementen (12) verbundenen Gelenkgliedern (22) besteht, die eine Öffnung in Richtung auf die Verbindungselemente (12) aufweisen, **dadurch gekennzeichnet,**
- **dass** das Verbindungselement ein definiertes eindimensionales Gelenk (12) ist und
- **dass** an der den Verbindungselementen gegenüberliegenden Seite des Hilfsmittels (10) Rastelemente (42) angeordnet sind, die beim Biegen des Hilfsmittels die jeweils benachbarten Gelenkglieder (22) formschlüssig miteinander verbinden.

2. Biege- und Haltehilfsmittel nach Anspruch 1, **dadurch gekennzeichnet, dass** jede Rastvorrichtung (42) aus mindestens einem Rasthaken (52) und mindestens einem Rastnocken (72) besteht.

3. Biege- und Haltehilfsmittel nach Anspruch 1, **dadurch gekennzeichnet, dass** die Gesamtbreite der Elemente der Rastvorrichtung (42) mindestens ein Viertel der Gesamtbreite des Hilfsmittels (10) beträgt.

4. Biege- und Haltehilfsmittel nach Anspruch 1, **dadurch gekennzeichnet, dass** die Rasthaken (52) aller Gelenkglieder (22) in die gleiche Richtung orientiert sind.

5. Biege- und Haltehilfsmittel nach Anspruch 1, **dadurch gekennzeichnet, dass** der Rasthaken (52) eines Gelenkgliedes (22) einen Haken (55) aufweist, der unter elastischer Verformung in einen Freiraum (82) des benachbarten Gelenkgliedes (22) eingreift.

6. Biege- und Haltehilfsmittel nach Anspruch 1, **dadurch gekennzeichnet, dass** die Wandstärke des Auslegers (53) des Rasthakens (52) über die Hakenbreite variiert.

7. Biege- und Haltehilfsmittel nach Anspruch 1, **dadurch gekennzeichnet, dass** die Rasthaken (52) und -nokken (72) an den sich beim Biegevorgang berührenden Bereichen Fasen (63, 76) unterschiedlicher Schrägen aufweisen.

8. Biege- und Haltehilfsmittel nach Anspruch 1, **dadurch gekennzeichnet, dass** das Hilfsmittel (10) ein Anfangs-(24) und ein Endglied (25) beinhaltet, wobei der Außendurchmesser des Endgliedes (25) zumindest bereichsweise kleiner ist als der Innendurchmessers im Endbereich des Anfangsgliedes (24).

9. Biege- und Haltehilfsmittel nach Anspruch 1, **dadurch gekennzeichnet, dass** Bereiche der Stirnseiten (28, 29) bei Überschreiten des Gesamtbiegewinkels einander berühren.

10. Biege- und Haltehilfsmittel nach Anspruch 1, **dadurch gekennzeichnet, dass** zwei oder mehrere Hilfsmittel (10) mit oder ohne Zwischenglieder miteinander formschlüssig verbunden sind.

11. Biege- und Haltehilfsmittel nach Anspruch 1, **dadurch gekennzeichnet, dass** das Verbindungselement (12) ein Filmgelenk ist.

12. Biege- und Haltehilfsmittel nach Anspruch 1, **dadurch gekennzeichnet, dass** an dem Hilfsmittel (10) Vorrichtung zusätzliche Befestigungselemente oder-aussparungen angeordnet sind.

13. Biege- und Haltehilfsmittel nach einem der vorhergehenden Ansprüche, **dadurch gekennzeichnet, dass** an wenigstens einem Ende ein Steckübergang zur Verbindung mit einem weiteren Hilfsmittelteil mit Komplementäransatz, insbesondere einem einzelnen steckbaren Glied oder einem drehbaren Adapter versehen ist.

## Claims

1. Bending and holding aid, in particular for pipes, cables and wires, consisting of a bendable hollow body with a substantially tubular enveloping surface which is closed at least in one region and open at both end faces and which consists of individual joint members (22) which are connected to connecting elements (12) and which have an opening in a direction towards the connecting elements (12), **characterised in that**
- the connecting element is a predefined one-dimensional joint (12) and
- on the side of the aid (10) opposite the connecting elements are arranged latch elements (42) which, when the aid is bent, connect the respectively adjacent joint members (22) to each other in form-locking relationship.

2. Bending and holding aid according to claim 1, **characterised in that** each latch device (42) consists of at least one latch hook (52) and at least one latch projection (72).

3. Bending and holding aid according to claim 1, **characterised in that** the total width of the elements of the latch device (42) is at least one-quarter of the total width of the aid (10).

4. Bending and holding aid according to claim 1, **characterised in that** the latch hooks (52) of all joint members (22) are oriented in the same direction.

5. Bending and holding aid according to claim 1, **characterised in that** the latch hook (52) of one joint member (22) has a hook (55) which with elastic deformation engages in a free space (82) of the adjacent joint member (22).

6. Bending and holding aid according to claim 1, **characterised in that** the wall thickness of the arm (53) of the latch hook (52) varies over the hook width.

7. Bending and holding aid according to claim 1, **characterised in that** the latch hooks (52) and projections (72) have chambers (63, 76) of different slopes in the regions which touch each other during the bending operation.

8. Bending and holding aid according to claim 1, **characterised in that** the aid (10) contains a starting member (24) and an end member (25), wherein the outside diameter of the end member (25) at least in one region is smaller than the inside diameter in the end region of the starting member (24).

9. Bending and holding aid according to claim 1, **characterised in that** regions of the end faces (28, 29) touch each other on exceeding the total bending angle.

10. Bending and holding aid according to claim 1, **characterised in that** two or more aids (10) with or without intermediate members are connected to each other in form-locking relationship.

11. Bending and holding aid according to claim 1, **characterised in that** the connecting element (12) is a film joint.

12. Bending and holding aid according to claim 1, **characterised in that** on the aid (10) are arranged additional fastening elements or recesses.

13. Bending and holding aid according to any of the preceding claims, **characterised in that** at at least one end, a socket-type junction for connection to a further aid portion is provided with a complementary attachment, in particular an individual socket-type member or a rotatable adapter.

## Revendications

1. Dispositif de flexion et de retenue, en particulier pour tuyaux, câbles et lignes électriques, composé d'un corps creux flexible, fermé au moins par parties, ouvert aux deux extrémités, avec une surface enveloppante essentiellement tubulaire, composée d'éléments articulés individuels (22) reliés par des éléments de liaison (12), lesquels éléments articulés présentent une ouverture en direction des éléments de liaison (12), **caractérisé par le fait**
- **que** l'élément de liaison est une articulation unidimensionnelle définie (12) et
- **que** des éléments de verrouillage ou d'enclenchement (42) sont disposés du côté du dispositif (10) opposé aux éléments de liaison, lesquels éléments de verrouillage ou d'enclenchement relient entre eux par fermeture géométrique les éléments articulés (22) respectivement voisins lors de la flexion du dispositif

2. Dispositif de flexion et de retenue selon la revendication 1, **caractérisé par le fait que** chaque dispositif de verrouillage (42) est composé d'au moins un crochet de verrouillage (52) et d'au moins un ergot de verrouillage (72).

3. Dispositif de flexion et de retenue selon la revendication 1, **caractérisé par le fait que** la largeur totale des éléments du dispositif de verrouillage (42) est d'au moins un quart de la largeur totale du dispositif (10).

4. Dispositif de flexion et de retenue selon la revendication 1, **caractérisé par le fait que** les crochets de verrouillage (52) de tous les éléments articulés (22) sont orientés dans la même direction.

5. Dispositif de flexion et de retenue selon la revendication 1, **caractérisé par le fait que** le crochet de verrouillage (52) d'un élément articulé (22) présente un crochet (55) qui s'engage dans un espace libre (82) de l'élément articulé (22) voisin en se déformant élastiquement.

6. Dispositif de flexion et de retenue selon la revendication 1, **caractérisé par le fait que** l'épaisseur de paroi de la flèche (53) du crochet de verrouillage (52) varie sur la largeur du crochet.

7. Dispositif de flexion et de retenue selon la revendication 1, **caractérisé par le fait que** les crochets de verrouillage (52) et ergots de verrouillage (72) présentent des chanfreins (63, 76) d'inclinaisons différentes au niveau des zones qui sont en contact lors du processus de flexion.

8. Dispositif de flexion et de retenue selon la revendication 1, **caractérisé par le fait que** le dispositif (10) contient un élément initial (24) et un élément terminal (25), le diamètre extérieur de l'élément terminal (25) étant, au moins par parties, plus petit que le diamètre intérieur dans la partie terminale de l'élément initial (24).

9. Dispositif de flexion et de retenue selon la revendication 1, **caractérisé par le fait que** des zones des faces frontales (28, 29) se touchent en cas de dépassement de l'angle de flexion totale.

10. Dispositif de flexion et de retenue selon la revendication 1, **caractérisé par le fait que** deux ou plusieurs dispositifs (10) sont reliés entre eux par fermeture géométrique avec ou sans éléments intermédiaires.

11. Dispositif de flexion et de retenue selon la revendication 1, **caractérisé par le fait que** l'élément de liaison (12) est une articulation à film.

12. Dispositif de flexion et de retenue selon la revendication 1, **caractérisé par le fait que** des éléments ou évidements de fixation supplémentaires sont disposés sur le dispositif (10).

13. Dispositif de flexion et de retenue selon l'une des revendications précédentes, **caractérisé par le fait qu'**à au moins une extrémité, il est prévu un adaptateur enfichable pour la liaison avec une autre pièce de dispositif muni d'une pièce complémentaire, en particulier d'un élément enfichable individuel ou d'un adaptateur rotatif.
